# EUROPEAN PATENT APPLICATION

(11) **EP 4 286 472 A1**
(43) Date of publication of application: **06.12.2023**
(21) Application number: 23176711.2
(22) Date of filing: 01.06.2023
(51) Int. Cl.: C08L 19/00, C08L 23/06

(54) **ADDITIVE FOR THE PHYSICO-CHEMICAL ACTIVATION OF RUBBER POWDER PARTICLES AND PRE-TREATED RUBBER OBTAINED THROUGH THE USE OF SAID ADDITIVE**

(30) Priority: 03.06.2022 ES 202230486
(71) Applicant: Engineering For Sustainable Pavements, S.L., 28034 Madrid (ES); Reciclado de Neumáticos de Castilla y León, S.L., 34880 Guardo (Palencia) (ES)
(72) Inventor: DE LEÓN ALONSO, Luis Alfonso, 28034 Madrid (ES); DEL CERRO SERENA, Aitor, 34880 Guardo (Palencia) (ES)
(74) Representative: Ungria López, Javier

(57) **Abstract**

An object of the invention is an additive for the physico-chemical activation of rubber powder particles that comprises: (a) between 1 and 40% by weight of recovered oil and (b) between 0.5% and 20% of low-density polyethylene. Another object of the invention is the process for obtaining said additive, the pre-treated rubber obtained through its use, the process for obtaining said pre-treated rubber and its use to modify asphalt mixtures.

## Description

### TECHNICAL FIELD

The present invention falls within the technical field of the chemical industry. In particular, it relates to a novel additive for the physico-chemical activation of rubber powder particles, as well as to the process for obtaining it. In addition, an object of the invention is the pre-treated rubber obtained through the use of said additive, as well as its use during the manufacture and subsequent use of bituminous mixtures for modifying the technical performance of said mixtures.

### BACKGROUND OF THE INVENTION

Rubber currently has multiple applications. Due to its excellent properties of elasticity and resistance, it is used in applications as diverse as the manufacture of tyres, waterproof items, security items, road paving, etc. In the vast majority of these applications, natural rubber is subjected to a pretreatment in order to transform it into a more durable material with more suitable properties for its final application. To carry out said rubber treatment process, different additives can be used, which modify the base polymer by forming cross-links between its different chains.

Currently, more than 1.5 billion used tyres are generated in the world every year, which causes a major problem since said used tyres must be correctly managed in order to give them a second useful life or to obtain new products from their treatment which serve as raw materials for the manufacture of other products.

In Spain, the generated volume is approximately 280,000 tonnes of used tyres per year, with the material recovery of said used tyres being increasingly important compared to energy recovery and there being multiple and varied applications of the different products (rubber granules, textile fibres, metallic materials, rubber powder) obtained from the treatment of said used tyres.

One of the applications with the greatest potential for rubber powder consumption, as far as volume is concerned, is its addition as a constituent element of a bituminous mixture (also known as asphalt mixture), since the rubber powder provides this mixture with a number of very significant improvements to its technical properties compared to conventional mixtures.

There are already many decades of experience behind it and a great number of works have been carried out with rubberized asphalt mixtures, with excellent results in general, although the existing technologies for addition of rubber powder during the manufacturing process of the mixture have had some problems that have, in turn, led to a slower than desired growth and implementation of mixtures of this type with rubber.

To solve these problems, so-called pre-treated or modified rubbers have appeared in recent years, which are obtained from the treatment at source of conventional rubber powder to achieve a modified rubber that can be easily incorporated into the asphalt mixture that, in addition, solves problems derived from the interaction between conventional rubber powder with bitumen (asphalt).

The present invention offers a particularly advantageous alternative to the additives known and currently used to pre-treat rubber powder, some of them having a chemical or artificial origin or coming from virgin raw materials, such as, for example, petroleum. Compared to them, the additive object of the present invention offers the advantage of coming from waste recycling or reuse processes. In this sense, the sustainability of the pre-treated rubber manufacturing process is improved compared to the materials and processes used currently.

In addition, an object of the invention is the pre-treated rubber obtained through the additive object of the invention for the manufacture of asphalt mixtures in a more sustainable way than conventional processes. Thus, a process capable of consuming fewer natural resources is achieved by taking advantage of waste as raw materials that, in this sense, are materially recovered. Therefore, it is a novel product that helps promote the circular economy.

### DESCRIPTION OF THE INVENTION

In this sense, a first object of the invention is a novel additive for the physico-chemical activation of rubber powder particles, characterized in that it comprises:
- between 1 and 40% by weight, more preferably between 1 and 25% by weight, of recovered oil that is characterized in that it comprises a hydrocarbon mixture obtained by a used lubricant oil treatment process, which in turn comprises, preferably:
   - a first (optional) sub-step for pre-treating the used lubricant oil to remove impurities. This first step can be carried out through any conventional technique intended for this purpose,
   - a second sub-step for extracting, preferably with propane as a solvent, petroleum hydrocarbons (paraffins, etc.) present in the used lubricant oil, and
   - a third sub-step comprising at least one distillation process and, more preferably, two distillations, a first atmospheric distillation and a second vacuum distillation;
   wherein said hydrocarbon mixture in turn comprises between 81% and 87% by weight of saturated hydrocarbons with a carbon number within the range of C15 to C50 and between 12% and 18% by weight of aromatic hydrocarbons; and
- between 0.5% and 20%, more preferably between 1% and 10% by weight, of a plastic consisting of low-density polyethylene (LDPE), which is used as a compacting agent and binder. Preferably, said LDPE will correspond to the reject of a plastic waste treatment process. In a preferred embodiment, the LDPE will have a melting point preferably lower than 160°C and, even more preferably, of 123°C.

The specific composition of the recovered oil will depend on the used lubricant oil that is used to obtain it, although it does not limit the object of the invention. In a particular embodiment of the invention, the recovered oil will have a density of between 860 and 880 kg/m³ at 15°C, according to ASTM D 1298 standard, and a kinematic viscosity between 20.5 and 60 mm²/s, according to ASTM D 445 standard.

One of the main advantages of the claimed additive is that it is obtained from waste recycling and, in particular, from oil coming from the recycling of used lubricant oils. In addition, LDPE can correspond to the reject of a plastic waste treatment process. It is therefore a sustainable product, according to a circular economy model.

Preferably, the process for obtaining the additive object of the invention will comprise a mixing process under stirring of the recovered oil and LDPE at a temperature preferably between 50°C and 150°C and for a period of time that can vary, preferably, between 10 and 90 minutes.

In addition, an object of the invention is the pre-treated rubber obtained by the process comprising the mixture of:
- between 50% and 99% by weight, more preferably between 70 and 90% by weight of rubber powder particles coming from the treatment of End-of-Life Tyres (ELT); and
- between 1% and 50% by weight, more preferably between 5 and 20% by weight of the additive as claimed.

In a particular embodiment of the invention, the pre-treated rubber may comprise, preferably:
- 87% by weight of rubber powder particles coming from the treatment of End-of-Life Tyres (ELT);
- 10% by weight of recovered oil; and
- 3% by weight of LDPE, preferably coming from the reject of a plastic waste treatment process.

Preferably, the rubber powder particles will have a maximum size equal to or less than 0.6 mm.

Likewise, an object of the invention is the process for obtaining said pre-treated rubber, which consists of a physico-chemical activation process of rubber powder particles through the use of the additive object of the invention. Said process may comprise adding between 50% and 99% by weight, more preferably between 70 and 90% by weight, of the rubber powder particles to the claimed additive, in a percentage preferably between 1 and 50% by weight, and more preferably between 5 and 20% by weight. By means of this process, the activation or swelling of the rubber particles will be achieved up to a partial saturation that will prevent subsequent excess absorption of other elements by said rubber particles. The process may be carried out for a variable period of time, preferably between 10 and 60 minutes, at a preferred temperature of between 70 and 150°C.

Lastly, another object of the invention is the use of the claimed pre-treated rubber for modifying bituminous or asphalt mixtures. The percentage of addition of the pre-treated rubber in an asphalt mixture can vary, depending on the type of mixture and the technical performance to be achieved. Preferably, said percentage may vary between 0.3% and 2% by weight with respect to the total. Due to the use of the pre-treated rubber object of the invention, asphalt mixtures are obtained with improved properties and technical features than conventional mixtures. In addition, a more environmentally and economically sustainable product can be obtained by using reused materials that would otherwise be discarded, complying in any case with the requirements established in the current regulations on bituminous mixtures.

### BRIEF DESCRIPTION OF THE FIGURES

To complete the description and for the purpose of helping to better understand the features of the invention, the following figure is included as an integral part of said description, wherein the following has been depicted in an illustrative and non-limiting manner:

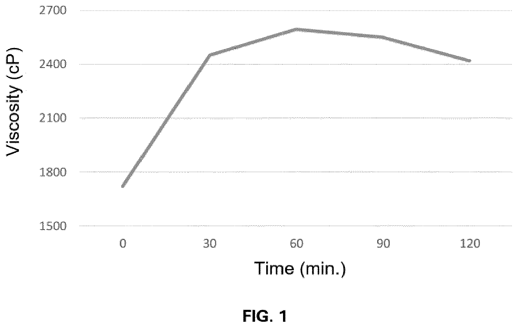

**Figure 1** shows a graph corresponding to the viscosity evolution test over time, measured according to UNE-EN 13302 standard, of an asphalt bitumen and pre-treated rubber mixture as described in the following section describing a preferred embodiment of the invention. The viscosity measurement (mPa*s) is represented on the Y-axis and the time (minutes) is represented on the X-axis.

### DESCRIPTION OF A PREFERRED EMBODIMENT OF THE INVENTION

To demonstrate the optimal properties of the additive for the physico-chemical activation of rubber powder particles object of the invention, a series of specific tests were carried out, as described below.

First, a mixture of recovered oil and LDPE plastic was prepared in a 40:150 ratio. This mixing step was carried out at a temperature of 150°C, for a period of 60 minutes.

Next, a treatment process was carried out on rubber powder particles coming from End-of-Life Tyres (ELT) to achieve their physico-chemical activation. To that end, the rubber powder particles were added to the recovered oil and LDPE plastic mixture for a period of 60 minutes, at a temperature of 150°C, resulting in pre-treated rubber.

Subsequently, a bitumen sample was heated in an oven to a temperature of 180°C, temperature at which the previously obtained pre-treated rubber was incorporated, in a ratio of 80% by weight of bitumen and 20% by weight of pre-treated rubber.

Once the bitumen and pre-treated rubber mixture was obtained, its viscosity was measured with Brookfield equipment (model HBDV-111 ULTRA), according to the UNE-EN 13302 standard, with spindle number 27, maintaining the temperature of the mixture at 160°C. The results obtained are shown in the following table:

| **Tests carried out** | | | | | | | |
|---|---|---|---|---|---|---|---|
| Time (minutes) | 0 | 5 | 15 | 30 | 60 | 90 | 120 |
| Viscosity (mPa*s) | 1.720 | 1.736 | 2.152 | 2.449 | 2.596 | 2.551 | 2.417 |

These results are also shown in Figure 1 accompanying this description. As can be observed, the viscosity of the mixture increases in the first few minutes, until stabilising in approximately 30 minutes. This demonstrates the feasibility and stability of the mixture obtained from the pre-treated rubber object of the invention for its use in the preparation of bituminous mixtures, when a stable value of the viscosity is achieved after a fairly short period of time, and sufficient under normal conditions for its application in asphalt pavement works. In recent decades, experiences with conventional rubbers (without pretreatment) for modifying asphalt mixtures have not been satisfactory in general due to the constant increase in viscosity for hours and the evolution of the process of bitumen-rubber interaction and of said mixture, even once the asphalt mixture has been extended and compacted on site, thereby failing to achieve the characteristics required in the pavement and often leading said pavement layer to premature failure within a few weeks or months of coming into service.

## Claims

1. An additive for the physico-chemical activation of rubber powder particles **characterized in that** it comprises:
• between 1 and 40% by weight of recovered oil comprising a hydrocarbon mixture obtained by a used lubricant oil treatment process, wherein said hydrocarbon mixture in turn comprises between 81% and 87% by weight of saturated hydrocarbons with a carbon number within the range of C15 to C50 and between 12% and 18% by weight of aromatic hydrocarbons; and
• between 0.5% and 20% of a plastic consisting of low-density polyethylene.

2. The additive, according to claim 1, wherein the used lubricant oil treatment process comprises:
• a first sub-step of pre-treating the lubricant oil that consists of a step for removing impurities;
• a second sub-step of extracting petroleum hydrocarbons; and
• a third sub-step comprising at least one distillation process.

3. The additive, according to claim 1 or 2, wherein the low-density polyethylene corresponds to the reject of a plastic waste treatment process.

4. A process for obtaining the additive according to any one of claims 1 to 3, **characterized in that** it comprises mixing under stirring between 1 and 40% by weight of recovered oil and between 0.5% and 20% by weight of low-density polyethylene, wherein said mixing is carried out at a temperature between 50°C and 150°C and for a period of time between 10 and 90 minutes.

5. A pre-treated rubber obtained through a mixing process of:
• between 50% and 99% by weight of rubber powder particles coming from the treatment of End-of-Life Tyres (ELT); and
• between 1% and 50% by weight of the additive according to any one of claims 1 to 3.

6. The pre-treated rubber, according to claim 5, wherein the rubber powder particles have a maximum size equal to or less than 0.6 mm.

7. A process for obtaining the pre-treated rubber according to claim 5 or 6, **characterized in that** it comprises mixing:
• between 50% and 99% by weight of rubber powder particles coming from the treatment of End-of-Life Tyres (ELT); and
• between 1% and 50% by weight of the additive as defined in any one of claims 1 to 3.

8. The process according to claim 7, wherein said process is carried out for a period of time comprised between 10 and 60 minutes and at a temperature between 70°C and 150°C.

9. A use of the pre-treated rubber according to claim 5 or 6 to modify asphalt mixtures.

10. The use according to claim 9, wherein the percentage of pre-treated rubber in the asphalt mixture is between 0.3% and 2% by weight with respect to the total.
